# EUROPÄISCHE PATENTANMELDUNG

(11) **EP 2 189 764 A1**
(43) Veröffentlichungstag der Anmeldung: **26.05.2010**
(21) Anmeldenummer: 09174639.6
(22) Anmeldetag: 30.10.2009
(51) Int. Cl.: G01F 1/68, G01F 1/74

(54) **Verfahren und Messsystem zur Bestimmung und/oder Überwachung einer Aggregatszustandsänderung eines Messmediums an einem thermischen Durchflussmessgerät**

(30) Priorität: 19.11.2008 DE 102008043887
(71) Anmelder: Endress + Hauser Flowtec AG, 4153 Reinach (CH)
(72) Erfinder: Neuhaus, Markus, 5070 Frick (CH); Wagner, Michel, 4052 Basel (CH)
(74) Vertreter: Andres, Angelika Maria

(57) **Zusammenfassung**

Verfahren zur Bestimmung und/oder Überwachung von Aggregatszustandsänderungen von zumindest einem ersten Teil eines Messmediums an einem thermischen Durchflussmessgerät, wobei mittels der Temperatur des Messmediums, mittels der chemischen Zusammensetzung des Messmediums und mittels des Partialdrucks des zumindest ersten Teils des Messmediums und/oder mittels des Gesamtdrucks des Messmediums zumindest eine Phasengrenzlinie des zumindest ersten Teils des Messmediums bestimmt wird, und wobei zumindest ein erstes Messsignal aus einer Temperaturdifferenz (ΔT) zwischen einem ersten Temperatursensor und einem zweiten Temperatursensor des thermischen Durchflussmessgeräts und/oder aus einer dem Messmedium zugeführten Heizleistung (Q) bereitgestellt wird, wobei bei einem Zustand des zumindest ersten Teils des Messmediums im Bereich der Phasengrenzlinie des ersten Teils des Messmediums, Störungen im Messsignal vorgegebener Art als Aggregatszustandsänderungen des zumundest ersten Teils des Messmediums am thermischen Durchflussgerät erkannt werden.

## Beschreibung

Die vorliegende Erfindung betrifft ein Verfahren zur Bestimmung und/oder Überwachung von Aggregatszustandsänderungen von zumindest einem ersten Teil eines Messmediums an einem thermischen Durchflussmessgerät, wobei zumindest ein erstes Messsignal aus einer Temperaturdifferenz (ΔT) zwischen einem ersten Temperatursensor und einem zweiten Temperatursensor des thermischen Durchflussmessgeräts und/oder aus einer dem Messmedium zugeführten Heizleistung (Q) bereitgestellt wird.

Die thermische Durchflussmessung beruht im Wesentlichen auf zwei Messprinzipien, die thermische Dispersion und das Messprinzip des thermischen Profils bzw. Temperaturanstiegs. Bei der thermischen Dispersion wird ein beheiztes Messelement der Strömung des Messmediums ausgesetzt. Die dadurch verursachte Abkühlungsrate ist ein Maß für die Fließgeschwindigkeit. Bei einer Messung mittels thermischen Profils bzw. Temperaturanstiegs wird in einem begrenzten Bereich der Strömung Wärme eingeleitet, wodurch sich lokal die Temperatur erhöht, woraus sich wiederum, zusammen mit der zugeführten Energie, der Massedurchfluss errechnen lässt. Dabei messen zwei Temperatursensoren die Temperaturen des Messmediums an verschiedenen Punkten, meist vor und nach der zugeführten Wärme. Es finden auch mehrere Heizelemente und Temperatursensoren Verwendung, um ein besseres Bild des thermischen Profils zu erhalten.

Bei beiden Messmethoden können die Sensoren in der Hauptleitung oder in einem Bypass angebracht sein. Die beiden Funktionsprinzipien überlappen sich in der Praxis erheblich.

Herkömmliche thermische Durchflussmessgeräte für industrielle Prozesse verwenden üblicherweise zwei möglichst gleichartig ausgestaltete Temperatursensoren, die in, meist stiftförmigen, Metallhülsen, sog. Stingers, angeordnet sind und die in thermischem Kontakt mit dem durch ein Messrohr oder durch die Rohrleitung strömenden Medium sind. Dabei sind beide Temperatursensoren üblicherweise in ein Messrohr eingebaut; die Temperatursensoren können aber auch direkt in der Rohrleitung montiert sein. Einer der beiden Temperatursensoren ist ein so genannter aktiver Temperatursensor, der mittels einer Heizeinheit beheizt wird. Als Heizeinheit ist entweder eine zusätzliche Widerstandsheizung vorgesehen, oder bei dem Temperatursensor selbst handelt es sich um ein Widerstandselement, z.B. um einen RTD-(Resistance Temperature Device) Sensor, der durch Umsetzung einer elektrischen Leistung, z.B. durch eine entsprechende Variation des Messstroms erwärmt wird. Neuerdings finden auch Dünnfilm-Widerstandselemente so genannte Thin Film Resistance Temperature Devices (TFRTD) Verwendeung. Bei dem zweiten Temperatursensor handelt es sich um einen passiven Temperatursensor: Er misst die Temperatur des Mediums.

Üblicherweise wird in einem thermischen Durchflussmessgerät der beheizbare Temperatursensor so beheizt, dass sich eine feste Temperaturdifferenz zwischen den beiden Temperatursensoren einstellt. Alternativ ist es auch bekannt geworden, über eine Regel-/Steuereinheit eine konstante Heizleistung einzuspeisen.

Tritt in dem Messrohr kein Durchfluss auf, so wird eine zeitlich konstante Wärmemenge zur Aufrechterhaltung der vorgegebenen Temperaturdifferenz benötigt. Ist hingegen das zu messende Medium in Bewegung, ist die Abkühlung des beheizten Temperatursensors wesentlich von dem Massedurchfluss des vorbeiströmenden Mediums abhängig. Da das Medium kälter ist als der beheizte Temperatursensor, wird durch das vorbeiströmende Medium Wärme von dem beheizten Temperatursensor abtransportiert. Um also bei einem strömenden Medium die feste Temperaturdifferenz zwischen den beiden Temperatursensoren aufrecht zu erhalten, ist eine erhöhte Heizleistung für den beheizten Temperatursensor erforderlich. Die erhöhte Heizleistung ist ein Maß für den Massedurchfluss bzw. den Massestrom des Mediums durch die Rohrleitung.

Wird hingegen eine konstante Heizleistung eingespeist, so verringert sich infolge des Durchflusses des Mediums die Temperaturdifferenz zwischen den beiden Temperatursensoren. Die jeweilige Temperaturdifferenz ist dann ein Maß für den Massedurchfluss des Mediums durch die Rohrleitung bzw. durch das Messrohr.

Es besteht somit ein funktionaler Zusammenhang zwischen der zum Beheizen des Temperatursensors notwendigen Heizenergie und dem Massedurchfluss durch eine Rohrleitung bzw. durch ein Messrohr. Die Abhängigkeit des Wärmeübertragungskoeffizienten von dem Massedurchfluss des Mediums durch das Messrohr bzw. durch die Rohrleitung wird in thermischen Durchflussmessgeräten zur Bestimmung des Massedurchflusses genutzt. Geräte, die auf diesem Prinzip beruhen, werden von der Anmelderin unter der Bezeichnung ,t-switch', ,t-trend' oder 't-mass' angeboten und vertrieben.

Thermische Durchflussmessgeräte eignen sich besonders zur Durchflussmessung von Gasen oder Gasgemischen. Kondensiert oder resublimiert nun ein Gas bzw. ein Teil eines Gases an dem beheizten Temperatursensor des thermischen Durchflussmessgeräts, verändert sich das Messsignal des thermischen Durchflussmessgeräts, es entsteht ein Messpeak, ein, bei einem unkorrigierten Messsignal, Fehler im gemessenen Durchfluss. Der Wärmeübergang von Flüssigkeit oder Feststoff zu Temperatursensor ist verschieden vom Wärmeübergang von Gas zu Temperatursensor. Durch das Kondensat bzw. das Resublimat wird dem thermischen Durchflussmessgerät zusätzliche Wärme entzogen. Das thermische Durchflussmessgerät regelt nach, d.h. die Heizleistung und damit die dem Messmedium zugeführte Wärmeenergie steigt. Durch diese Reaktionen wird vom thermischen Durchflussmessgerät ein Durchfluss angegeben, der nicht dem Durchfluss des Gases entspricht, welches durch die Messleitung strömt, ein Fehler im Durchflusssignal. Als weitere Fehlerquelle ist die entstehende Kondensations- bzw. Resublimationswärme anzusehen. So kann von einer Aggregatszustandsänderung des Messmediums bzw. eines Teils des Messmediums am thermischen Durchflussmessgerät als Störung gesprochen werden. Daher ist es bisher nur möglich, den Durchfluss von trockenem Gas mit einem thermischen Durchflussmessgerät hochgenau zu bestimmen und/oder zu überwachen.

Die Aufgabe der Erfindung besteht darin, ein Verfahren bereit zu stellen, mit welchem solche Aggregatszustandsänderungen erkannt werden können.

Die Aufgabe wird gelöst durch ein Verfahren zur Bestimmung und/oder Überwachung von Aggregatszustandsänderungen von zumindest einem ersten Teil eines Messmediums an einem thermischen Durchflussmessgerät, wobei mittels der Temperatur des Messmediums, mittels der chemischen Zusammensetzung des Messmediums und mittels des Partialdrucks zumindest des ersten Teils des Messmediums und/oder mittels des Gesamtdrucks des Messmediums, zumindest eine Phasengrenzlinie zumindest des ersten Teils des Messmediums bestimmt wird, und wobei zumindest ein erstes Messsignal aus einer Temperaturdifferenz (ΔT) zwischen einem ersten Temperatursensor und einem zweiten Temperatursensor des thermischen Durchflussmessgeräts und/oder aus einer dem Messmedium zugeführten Heizleistung (Q) bereitgestellt wird, wobei bei einem Zustand zumindest des ersten Teils des Messmediums im Bereich der Phasengrenzlinie des ersten Teils des Messmediums, Störungen im Messsignal vorgegebener Art als Aggregatszustandsänderungen zumundest des ersten Teils des Messmediums am thermischen Durchflussgerät erkannt werden.

Das Verfahren ist z.B. dafür geeignet, sowohl die Kondensatbildung und/oder die Resublimatbildung zumindest von Teilen eines ansonsten gasförmigen Messmediums am thermischen Durchflussmessgerät zu bestimmen und/oder zu überwachen, als auch das Verdampfen und/oder die Sublimation des am thermischen Durchflussmessgerät gebildeten Kondensats bzw. Feststoffs zu bestimmen und/oder zu überwachen. Die Begriffe Kondensat und Flüssigkeit, Sublimat und Gas, Resublimat und Feststoff sind dabei mit ihrer geläufigen Bedeutung versehen.

Das Messmedium kann dabei ein Reinstoff oder ein Gemisch aus mindestens zwei verschiedenen chemischen Elementen oder chemischen Verbindungen sein. Die verschiedenen Reinstoffe eines Gemischs sind die Komponenten. Diese können in einem heterogenen Gemisch in voneinander abgegrenzten Phasen vorliegen und in einem homogenen Gemisch auf molekularer Ebene vermischt und damit einphasig sein. Eine Komponente kann dabei auf mehrere Phasen verteilt sein, d.h. nicht alle Moleküle einer Komponente sind in einer einzigen Phase zu finden, sondern sie können auf mehrere Phasen aufgeteilt sein. Auch eine Phase kann wiederum aufgeteilt werden. Eine Phase muss beispielsweise nicht vollständig einen Aggregatszustandswechsel durchlaufen, sondern auch Teile der Phase können ihren Aggregatszustand verändern. Ändert nun z.B. ein Teil eines heterogen gemischten Messmediums seinen Aggregatszustand, so heißt das nicht, dass sich der Aggregatszustand einer Phase oder gar einer Komponente des Gemischs ändert, sondern das heißt, dass sich zumindest der Aggregatszustand eines Teils einer Phase einer Komponenten des gemischten Messmediums ändert. Die Moleküle der ursprünglich einen Phase sind nach der Änderung nur eines Teils der ursprünglich einen Phase nun in mindestens zwei durch Phasengrenzflächen getrennte Phasen aufgeteilt, wobei mindestens eine, einen von der ursprünglichen Phase verschiedenen Aggregatszustand aufweist.

Die Temperatur des Messmediums wird vom thermischen Durchflussmessgerät selbst ermittelt. Daten über die chemische Zusammensetzung des Messmediums, den Partialdruck des betreffenden Teils des Messmediums und/oder den Gesamtdruck des Messmediums, sind vom Bediener anzugeben oder werden von externen und/oder integrierten Messgeräten ermittelt und dem thermischen Durchflussmessgerät zur Verfügung gestellt. Somit sind diese Daten als bekannt anzusehen.

Die Störungen im Messsignal aus Temperaturdifferenz (ΔT) und/oder Heizleistung (Q), hervorgerufen durch Aggregatszustandsänderungen zumindest eines Teils des Messmediums am thermischen Durchflussmessgerät, sind vorgegebener Art, sie zeichnen sich also durch bestimmte Merkmale aus und besitzen besondere Eigenschaften. Diese Merkmale bzw. Eigenschaften sind jedoch abhängig von verschiedenen Größen wie der Zusammensetzung des Messmediums, dem Druck, der Temperatur oder z.B. der Tropfengröße eines niedergeschlagenen Kondensats. Sie werden mit Methoden der Signalverarbeitung detektiert. Dieser Teil des Verfahrens könnte somit als Signalverarbeitung des Messsignals bezeichnet werden. Die Parameter der Signalverarbeitung zur Detektion der Störungen sind vorteilhaft zur Laufzeit des Verfahrens änderbar.

Ausgehend von der als bekannt betrachteten Zusammensetzung des Messmediums, des Drucks und der Temperatur des Messmediums werden die Phasengrenzlinien des Messmediums nach einer, einer fachlich qualifizierten Person bekannten Methode bestimmt. Weist nun das Messsignal eine beschriebene Störung, hervorgerufen durch Aggregatszustandsänderungen am thermischen Durchflussmessgerät zumindest eines Teils des Messmediums, auf, wenn sich der betreffende Teil des Messmediums in einem Zustand im Bereich der entsprechenden Phasengrenzlinie befindet, wird diese Störung als Aggregatszustandsänderung am thermischen Durchflussmessgerät erkannt.

Der Bereich um die Phasengrenzlinie, in welcher sich zumindest der entsprechende Teil des Messmediums befindet, um die Störung als Aggregatszustandsänderung zu erkennen, ist abhängig von verschiedenen Größen. Die Wahl der Bereichsgrenzen ist somit ebenso abhängig von den Zustandsgrößen des Messmediums bzw, dessen Teilen und weiteren Verfahrensgrößen wie z.B. der Messfrequenz. Ist beispielhaft die Messfrequenz niedrig und die Wahrscheinlichkeit einer schnellen Änderung von Zustandsgrößen des Messmediums ist hoch, sind die Bereichsgrenzen weiter zu fassen, als bei einer hohen Abtastungsrate und wenig schnellen Änderungen im Zustand des Messmediums. Dieser Teil des Verfahrens betrifft die Zustandsbestimmung des betreffenden Teils des Messmediums. Das Verfahren besteht somit aus zwei Teilen, der Signalverarbeitung des Messsignals und der Zustandsbestimmung des betreffenden Teils des Messmediums.

Wie auch bei der Signalverarbeitung sind die Bereichsgrenzen um die Phasengrenzlinien zur Laufzeit des Verfahrens parametrierbar. Ein thermisches Durchflussmessgerät, in weichem dieses Verfahren Verwendung findet, ist somit vorteilhaft vor Ort parametrierbar.

Der Druck als eine Zustandsgröße des Messmediums ist auf viele Arten zu bestimmen. Bei einem ideal sich verhaltenden Gas ist, nach dem Dalton-Gesetz, die Summe aller Partialdrücke der Komponenten gleich dem Gesamtdruck des Gemischs. Es lassen sich die Partialdrücke sehr einfach über den Gesamtdruck und die genaue Kenntnis über die Zusammensetzung des Gasgemischs, u.a. mit dem Stoffmengenanteil jeder Komponente am Gemisch, errechnen. Nun Verhalten sich die meisten Gase nicht ideal, sondern real. Allerdings sind mit ausreichenden Kenntnissen der Eigenschaften des Gemischs und dessen Komponenten, z.B. über die Virial- oder die Van-der-Waalskoeffizieten, die Partialdrücke abschätzbar. Eine Näherung ist durch größere Bereichsgrenzen bei der Signalverarbeitung des Messsignals und/oder der Zustandsbestimmung des betreffenden Teils des Messmediums kompensierbar. Die errechneten oder gemessenen Partialdrücke des Messmediums oder der errechnete oder gemessene Gesamtdruck des Messmediums schließen dabei dynamische Druckkomponenten mit ein. Neben dem statischen Druck kann an der Oberfläche des thermischen Durchflussmessgeräts ein Staudruck entstehen. Dieser ist u.a. abhängig von der Zusammensetzung und Dichte des Messmediums bzw. dessen Teilen und der entsprechenden Strömungsgeschwindigkeit. Bei kompressiblen Messmedien ist der dynamische Druck im Vergleich zu inkompressiblen Strömungen dabei nahezu zu vernachlässigen. Nicht vernachlässigbare dynamische Druckkomponenten werden separat bestimmt oder sind durch weitere bzw. vergrößerte Bereichsgrenzen bei der Signalverarbeitung des Messsignals und/oder der Zustandsbestimmung des betreffenden Teils des Messmediums kompensierbar.

In einer ersten Ausführungsform des erfindungsgemäßen Verfahrens weist das thermische Durchflussmessgerät zwei Temperatursensoren und eine Regel-/Auswerteeinheit auf, wobei die beiden Temperatursensoren in einem dem Medium zugewandten Bereich eines Gehäuses angeordnet und in thermischem Kontakt mit dem durch das Messrohr strömende Messmedium sind, wobei ein erster Temperatursensor beheizbar ausgestaltet ist, wobei ein zweiter Temperatursensor Information über die aktuelle Temperatur des Messmediums bereitstellt, wobei die Regel-/Auswerteeinheit anhand der Temperaturdifferenz (ΔT) zwischen den beiden Temperatursensoren und/oder anhand der dem ersten Temperatursensor zugeführten Heizleistung (Q) den Massedurchfluss des Messmediums bestimmt.

Gemäß einer vorteilhaften Weiterbildung des erfindungsgemäßen Verfahrens wird die Steigung zwischen zwei vorgegebenen Punkten des ersten Messsignals zur Erkennung der Aggregatszustandsänderungen zumindest des ersten Teils des Messmediums am thermischen Durchflussgerät bestimmt. Es wird also ein Differenzenquotient über ein bestimmtes Fenster gebildet. Der Abstand der beiden Punkte entspricht der Länge des Fensters, welches bevorzugt ein so genanntes "sliding window", also ein sich kontinuierlich vorwärts roulierendes Fenster ist. Die Wahl der beiden Punkte ist u.a. abhängig von der Zusammensetzung des Messmediums und der Signalqualität. Die Punkte sollten somit vor Ort wählbar und damit variierbar sein. Dabei können für steigende Sekanten unterschiedliche Grenzwerte gelten, als für fallende, um auf eine Aggregatszustandsänderung zu schließen. Eine steigende Sekante deutet dabei z.B. auf eine Kondensation oder Resublimation eines Teils des Messmediums am thermischen Durchflussmessgerät hin, eine fallende Sekante bedeutet hierbei vielmehr ein Verdampfen oder eine Sublimation. Die Detektion bekannter Phasenübergänge ist somit sehr einfach und schnell möglich.

Eine Möglichkeit um von Aggregatszustandsänderungen ausgelöste Störungen von Massenflussschlägen zu unterscheiden besteht in einer Ausgestaltung der Erfindung darin, die Sprungantwort für das Messmedium, z.B. ein Gasgemisch, zu berechnen. Diese Sprungantwort hat ein Maximum. Übersteigt die Störung im Messsignal, was sich insbesondere durch einen Peak bzw. einen Ausschlag im Messsignal äußert, die maximale Steigung der Sprungantwort, kann auf eine vorliegende Aggregatszustandsänderung geschlossen werden.

Bei einem Biogas mit 65mol% Methan und 35mol% Kohlenstoffdioxid liefert bei einer Prozesstemperatur von 25°C und einem Prozessdruck von 1050mBar die Berechung des Differenzenquotienten mit einem Abstand der diskreten Messpunkte von 20ms bei einer Gesamtfensterlänge von 400ms und bei einer Messfrequenz von 50Hz akzeptable Ergebnisse.

Als Eigenschaften des Messsignals, mittels welcher auf eine Aggregatszustandsänderung zumindest des ersten Teils des Messmediums am thermischen Durchflussgerät geschlossen wird, sind neben der Steigung des Messsignals z.B. auch die Amplitude des Messsignals bzw. deren Veränderung in einer bestimmten Zeit heranziehbar. Ein Fenster wird wiederum über das Messsignal geschoben. Ändert sich der Mittelwert des Signals im Fenster zu den vorherigen Fenstern zu stark, also über oder unterhalb eines vorgegebenen Grenzwerts, kann auf eine Aggregatszustandsänderung zumindest des ersten Teils des Messmediums am thermischen Durchflussgerät geschlossen werden, falls sich gleichzeitig das Messmedium in einem Zustand im Bereich seiner Phasengrenzlinien befindet.

Weitere Signalverarbeitungsmethoden, um das Messsignal auf Störungen zu untersuchen sind einem Fachmann bekannt, wie z.B. die Spektralanalyse, um periodische Vorgänge, wie z.B. am Sensor schwingende Tröpfchen, zu erkennen.

Bei einer sehr vorteilhaften Weiterbildung der Erfindung ist der Abstand zwischen den zwei vorgegebenen Punkten des Messsignals zur Berechnung der Steigung des Messsignals eine Funktion der Messfrequenz und der Zusammensetzung des Messmediums.

Eine sehr vorteilhafte Weiterbildung des erfindungsgemäßen Verfahrens ist darin zu sehen, dass das Vorliegen der als Aggregatszustandsänderungen zumindest des ersten Teils des Messmediums am thermischen Durchflussgerät erkannten Störungen im Messsignal am Durchflussmessgerät ausgegeben werden. Es ist denkbar, mittels einer Anzeige zu melden, ob und wann solche Störungen vorliegen, oder ein Display zeigt dem Benutzer, welche Art von Störung gerade vorliegt und/oder welche Auswirkung diese auf das Messsignal hat. Daneben ist eine Störung z.B. auch per Bus dem Prozesssteuerungssystem mitzuteilen. Bei einer Korrektur der Störung kann z.B. der unkorrigierte Wert und/oder die Korrektur selbst angezeigt werden.

Eine weitere vorteilhafte Weiterbildung des erfindungsgemäßen Verfahrens sieht vor, dass die als Aggregatszustandsänderungen zumindest des ersten Teils des Messmediums am thermischen Durchflussgerät erkannten Störungen im Messsignal korrigiert werden.

Gemäß einer vorteilhaften Weiterbildung des erfindungsgemäßen Verfahrens wird vorgeschlagen, dass vor einer drohenden Aggregatszustandsänderung im Prozess gewarnt wird. Wie bereits beschrieben, können mit Kenntnis des Drucks, der Temperatur und der Zusammensetzung des Messmediums die Phasengrenzlinien des Messmediums und dessen momentaner Zustand und damit dessen momentaner Abstand zu den Phasengrenzlinien errechnet werden. Geschieht dies innerhalb genügend kurzer Zeitintervalle oder fortlaufend, ist eine Funktion des Zustands des Messmediums bestimmbar und damit zeitliche Änderungen im Zustand des Messmediums abschätzbar. Somit kann eine bevorstehende Aggregatszustandsänderung erkannt werden.

Gemäß einer weiteren vorteilhaften Weiterbildung der erfindungsgemäßen Lösung weist der Bereich, in welchem sich der momentane Zustand des Messmediums relativ zu seinen Phasengrenzlinien befindet, wobei Störungen im Messsignal vorgegebener Art als Aggregatszustandsänderungen zumindest des ersten Teils des Messmediums am thermischen Durchflussgerät erkannt werden, Grenzen auf, welche 100mBar und/oder 1°K betragen.

In weiteren Ausgestaltungen der Erfindungen liegen die Grenzen bei höchstens 80mBar, insbesondere höchstens 60mBar, insbesondere höchstens 40mBar, insbesondere höchstens 20mBar oder gar bei 10mBar. Gleichzeitig betragen die Temperaturgrenzen höchstens 0,8°K, insbesondere höchstens 0,6°K, insbesondere höchstens 0,4°K, insbesondere höchstens 0,2°K oder gar nur 0,1°K. Bei dem oben genannten Beispiel der Bestimmung von Biogas mit 65mol% Methan und 35mol% Kohlenstoffdioxid, bei einer Prozesstemperatur von 25°C und einem Prozessdruck von 1050mBar, sind die Grenzen bei 50mBar und 0,5°K als praktikabel zu erachten.

Zur Korrektur von Störungen vorgegebener Art in einem Messsignal eines thermischen Durchflussmessgeräts, welche Störungen im Messsignal vorgegebener Art als Aggregatszustandsänderungen von zumindest eines ersten Teils des Messmediums am thermischen Durchflussgerät erkannt werden, wobei mittels der Temperatur des Messmediums, mittels der chemischen Zusammensetzung des Messmediums und mittels des Partialdrucks zumindest des ersten Teils des Messmediums und/oder mittels des Gesamtdrucks des Messmediums, zumindest eine Phasengrenzlinie zumindest des ersten Teils des Messmediums bestimmt wird, und wobei zumindest das Messsignal des thermischen Durchflussmessgeräts aus einer Temperaturdifferenz (ΔT) zwischen einem ersten Temperatursensor und einem zweiten Temperatursensor des thermischen Durchflussmessgeräts und/oder aus einer dem Messmedium zugeführten Heizleistung (Q) bereitgestellt wird, wobei bei einem Zustand zumindest des ersten Teils des Messmediums im Bereich der Phasengrenzlinie des ersten Teils des Messmediums die Störungen im Messsignal vorgegebener Art als Aggregatszustandsänderungen zumindest des ersten Teils des Messmediums am thermischen Durchflussgerät erkannt werden, wird vorgeschlagen, dass die als Aggregatszustandsänderungen von zumindest eines ersten Teils des Messmediums am thermischen Durchflussgerät erkannten Störungen im Messsignal geglättet werden.

Eine vorteilhafte Weiterbildung des erfindungsgemäßen Verfahrens sieht vor, dass der letzte Messwert des Messsignals vor der erkannten Störung im Messsignal so lange ausgegeben wird, bis keine Störung mehr im Messsignal erkannt wird. Im Zustand einer Tröpfchenbildung wird z.B. der letzte Durchflussmesswert eingefroren, bis sich die Tröpfchen wieder gelöst haben. Alternativ zur Ausgabe eines konstanten Messwerts könnte auch eine Fehlermeldung ausgegeben werden, dass der momentan gemessene Durchflusswert möglicherweise mit einem Fehler beaufschlagt ist, und/oder der Durchflussmesswert könnte auf Null gesetzt werden. Mit diesen Methoden kann z.B. verhindert werden, dass ein Summenzähler einen zu großen Durchfluss aufaddiert.

Weiter wird die der Erfindung zugrunde liegende Aufgabe gelöst durch ein thermisches Durchflussmessgerät zur Bestimmung und/oder Überwachung des Durchflusses eines Messmediums durch ein Messrohr, mit zwei Temperatursensoren und einer Regel-/Auswerteeinheit, wobei die beiden Temperatursensoren in einem dem Messmedium zugewandten Bereich eines Gehäuses angeordnet und in thermischem Kontakt mit dem durch das Messrohr strömende Messmedium sind, wobei ein erster Temperatursensor beheizbar ausgestaltet ist, wobei ein zweiter Temperatursensor Information über die aktuelle Temperatur des Messmediums bereitstellt, wobei die Regel-/Auswerteeinheit anhand der Temperaturdifferenz (ΔT) zwischen den beiden Temperatursensoren und/oder anhand der dem ersten Temperatursensor zugeführten Heizleistung (Q) den Massedurchfluss des Messmediums bestimmt, wobei das thermische Durchflussmessgerät so ausgestaltet ist, dass Aggregatszustandsänderungen von zumindest einem ersten Teil des Messmediums am thermischen Durchflussmessgerät erkennbar und/oder korrigierbar und/oder am Durchflussmessgerät ausgebbar sind. Dies geschieht insbesondere mit dem erfindungsgemäßen Verahren.

Kurz gesagt, solange sich das Messmedium in einem Zustand im Bereich der Phasengrenzlinie des ersten Teils des Messmediums befindet, werden Störungen im Messsignal vorgebbarer Art als Aggregatszustandsänderung erkannt und/oder ausgegeben und/oder korrigiert.

Das erfindungsgemäße thermische Durchflussmessgerät ist in einer vorteilhaften Ausgestaltung vor Ort parametrierbar.

Eine sehr vorteilhafte Weiterbildung der erfindungsgemäßen Lösung besteht darin, dass die Störungen im Messsignal vorgegebener Art als Aggregatszustandsänderungen zumindest des ersten Teils des Messmediums an einem beheizbaren Temperatursensor thermischen Durchflussgerät erkennbar und/oder korrigierbar und/oder am Durchflussmessgerät ausgebbar sind. Die Aggregatszustandsänderungen zumindest des ersten Teils des Messmediums, welche zu, für die Durchflussmessung wesentlichen Störungen im Messsignal führen können und als solche erkannt werden, beschränken sich im Wesentlichen auf den beheizbaren Temperatursensor des thermischen Durchfiussmessgeräts.

Die Erfindung wird anhand der nachfolgenden Figuren näher erläutert.
- Fig. 1: zeigt ein Flussdiagramm des erfindungsgemäßen Verfahrens,
- Fig. 2: zeigt den zeitlichen Verlauf von Messsignalen eines thermischen Durchflussmessgeräts,
- Fig. 3: zeigt ein erfindungsgemäßes thermisches Durchflussmessgerät,
- Fig. 4: zeigt ein Druck-Temperatur-Phasendiagramm eines Reinstoffs.

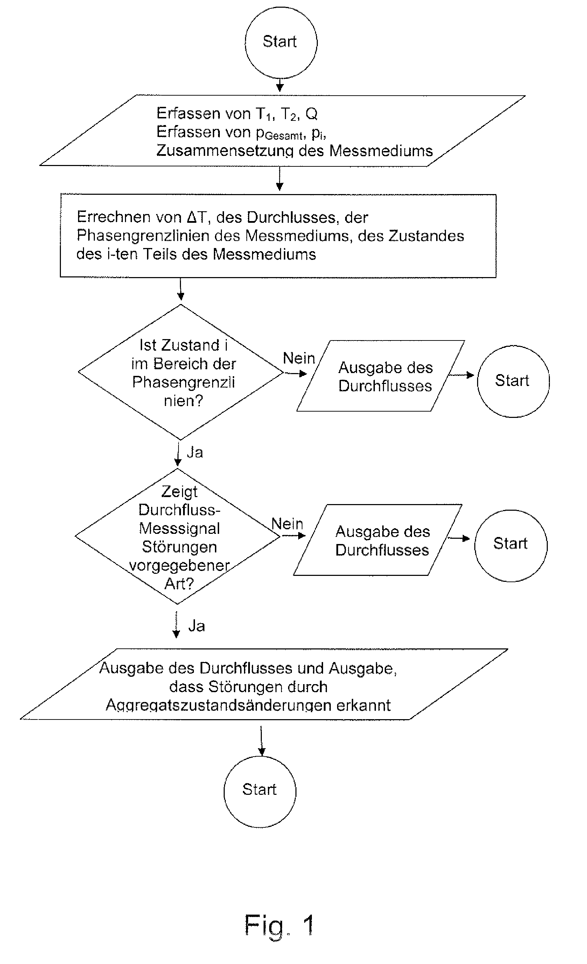

In Fig. 1 ist ein Flussdiagramm einer Ausführungsform des erfindungsgemäßen Verfahrens dargestellt. Die Temperaturen T₁ des ersten Temperatursensors und des zweiten Temperatursensors T₂ werden gemessen und daraus die Temperaturdifferenz ΔT zwischen erstem Temperatursensor und zweitem Temperatursensor errechnet, ebenso wie die zugeführte Heizleistung Q gemessen wird. Die exakte Zusammensetzung des Messmediums wird hingegen von einem Bediener eingegeben oder von einem externen Gasanalysator bereitgestellt, wie auch der Gesamtdruck p_{Gesamt} des Messmediums und/oder die Partialdrücke der n Komponenten des Messmediums bzw. der Partialdruck pᵢ des i-ten Teils des Messmediums. Aus den nun vorliegenden Daten werden der Durchfluss und die Phasengrenzlinien des Messmediums errechnet. Außerdem wird der Zustand zumindest des i-ten Teils des Messmediums errechnet. Befindet sich nun der Zustand des i-ten Teils des Messmediums im vorher festgelegten Bereich seiner Phasengrenzlinien, wird das Messsignal auf etwaige Störungen untersucht. Ist jedoch der Zustand des i-ten Teils des Messmediums nicht im Bereich der Phasengrenzlinien, wird der Durchflussmesswert ohne weitere Einschränkung ausgegeben. Die Art der Störungen, auf welche das Messsignal untersucht wird, ist ebenfalls bereits festgelegt, bzw. das Messsignal wird mittels einer bestimmten Methode auf Störungen untersucht. Zeigt das Messsignal keine Störungen vorgegebener Art und Weise an, so wird ebenfalls das Durchflusssignal ausgegeben. Werden dagegen Störungen erkannt, wird zusätzlich zum Durchflussmesswert ausgegeben, dass Störungen vorliegen und somit dem Durchflussmesswert nicht uneingeschränkt getraut werden kann.

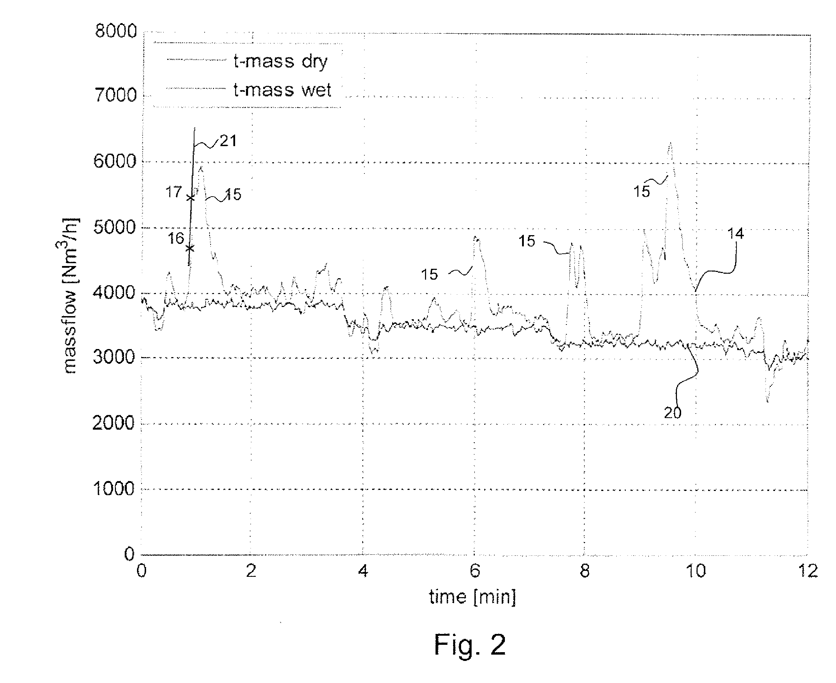

Fig. 2 offenbart den zeitlichen Verlauf von Messsignalen eines thermischen Durchflussmessgeräts. Zu sehen ist ein Messsignal 14 mit durch Kondensation an den Temperatursensoren bedingten Störungen 15 und ein ungestörtes Messsignal 20 des gleichen Messmediums 3, nachdem das Messmedium 3, insbesondere ein Fluid, getrocknet wurde. Die Peaks im gestörten Messsignal 14 sind typisch fürfür die Ablagerung von Tröpfchen an den Temperatursensoren. Diese werden erkannt bzw. detektiert durch die Steigung einer Sekanten 21 zwischen zwei Messpunkten 16, 17, welche einen bestimmten Abstand 18 zueinander aufweisen. Gleichermaßen wird das Ende der beschriebenen Aggregatszustandsänderung durch die nun negative Steigung einer weiteren Sekante 21 angezeigt. Unterschreitet die Steigung einen bestimmten Wert, kann wieder davon ausgegangen werden, dass der Durchflussmesswert wieder richtig angezeigt wird. Davor muss allerdings auf eine Aggregatszustandsänderung erkannt worden sein und auch wieder erkannt worden sein, dass sich das angelagerte Tröpfchen wieder vom Temperatursensor löst.

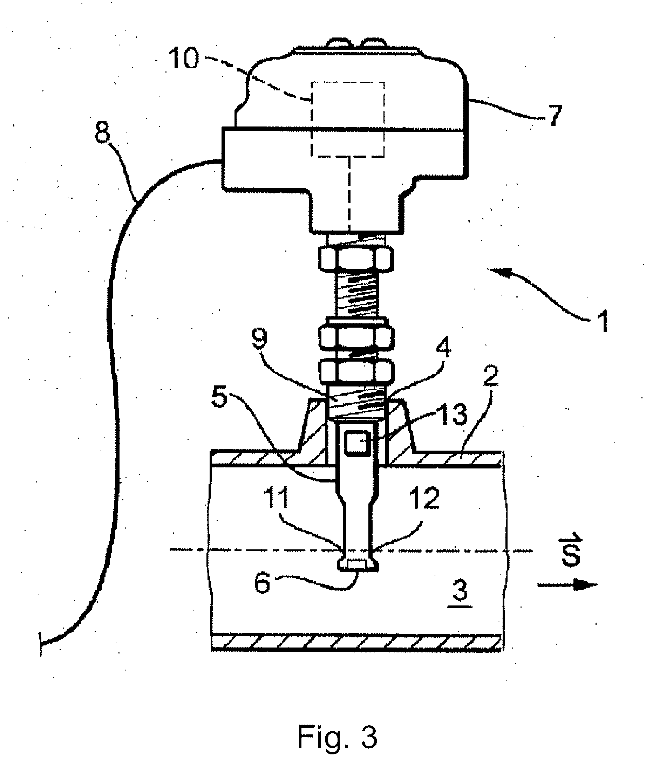

Fig. 3 zeigt eine schematische Darstellung des erfindungsgemäßen thermischen Durchflussmessgeräts 1 mit thermischem Durchflusssensor 6 und Messumformer 7. Das Durchflussmessgerät 1 ist über ein Schraubge-winde 9 in einem Stutzen 4, der sich an der Rohrleitung 2 befindet, befestigt. In der Rohrleitung 2 befindet sich das strömende Medium 3. Alternativ ist es möglich, das Durchflussmessgerät 1 mit integriertem Messrohr als Inline-Messgerät auszubilden.

Die Temperaturmesseinrichtung, die wesentlicher Teil des Sensors 6 ist, befindet sich in dem bereich des Gehäuses 5, der dem Medium 3 zugewandt ist. Die Ansteuerung der Temperatursensoren 11, 12 und/oder die Auswertung der von den Temperatursensoren 11, 12 gelieferten Messsignale erfolgt über die Regel-/Auswerteeinheit 10, die im gezeigten Fall im Mess-umformer 7 angeordnet ist. Über die Verbindung 8 erfolgt die Kommunikation mit einer entfernten, in der Fig. 3 nicht gesondert dargestellten Kontrollstelle.

Wie bereits zuvor erwähnt, kann es sich bei zumindest einem der beiden Temperatursensoren 11, 12 um ein elektrisch beheizbares Widerstands-element, um einen sog. RTD-Sensoren, handeln. Selbstverständlich kann in Verbindung mit der erfindungsgemäßen Lösung auch ein üblicher Temperatursensor, z.B. ein Pt100 oder Pt1000 oder ein Thermoelement eingesetzt werden, dem eine thermisch angekoppelte Heizeinheit 13 zuge-ordnet ist. Die Heizeinheit 13 ist in der Fig. 3 im Gehäuse 5 angeordnet und thermisch an den beheizbaren Temperatursensor 11, 12 gekoppelt, aber von dem Medium weitgehend entkoppelt. Die Ankopplung bzw. die Entkopplung erfolgt bevorzugt über die Auffüllung der entsprechenden Zwischenräume mit einem thermisch gut leitenden bzw. einem thermisch schlecht leitenden Material. Bevorzugt kommt hierzu ein Vergussmaterial zum Einsatz.

Mit dem Durchflussmessgerät 1 ist es möglich, den Massedurchfluss kontinuierlich zu messen; alternativ ist es möglich, das Durchflussmessgerät 1 als Schalter zu verwenden, der immer dann die Änderung eines Schaltzu-standes anzeigt, wenn zumindest ein vorgegebener Grenzwert unter- oder überschritten wird.

Vorteilhafter Weise ist darüber hinaus vorgesehen, dass beide Temperatur-sensoren 11, 12 beheizbar ausgestaltet sind, wobei die gewünschte Funktion des ersten Temperatursensors 11 oder des zweiten Temperatursensors 12 von der Regel/Auswerteeinheit 10 bestimmt ist. Beispielsweise ist es möglich, dass die Regel-/Auswerteeinheit 10 die beiden Temperatursensoren 11, 12 alternierend als aktiven oder passiven Temperatursensor 11, 12 ansteuert und den Durchflussmesswert über eine Mittelung der von beiden Temperatur-sensoren 11, 12 gelieferten Messwerte bestimmt.

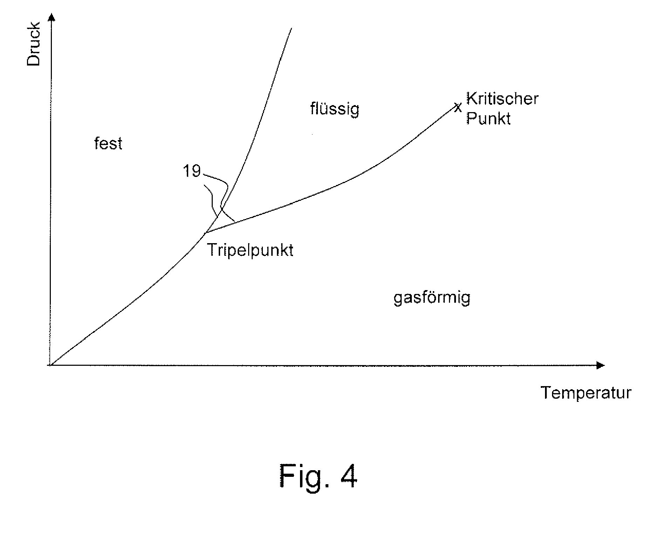

In Fig. 4 ist ein p,T-Diagramm, auch Phasendiagramm genannt, eines Reinstoffs ohne Anomalie dargestellt. Zu sehen sind die Phasengrenzlinien 19 des Reinstoffs zwischen den Aggregatszuständen fest, flüssig und gasförmig. Befindet sich der Zustand des Reinstoffs nun in einem nicht dargestellten festgelegten Bereich um die Phasengrenzlinie 19, wird eine Störung vorgegebener Art im Messsignal als Aggregatszustandsänderung des Reinstoffs erkannt.

### Bezugszeichenliste

- 1: Thermisches Durchflussmessgerät
- 2: Messrohr
- 3: Messmedium
- 4: Stutzen
- 5: Gehäuse
- 6: Sensor
- 7: Umformer
- 8: Verbindungsleitung
- 9: Gewinde
- 10: Regel-/Auswerteeinheit
- 11: Erster Temperatursensor
- 12: Zweiter Temperatursensor
- 13: Heizeinheit
- 14: Gestörtes Messsignal
- 15: Störung
- 16: Erster Punkt im Messsignal
- 17: Zweiter Punkt im Messsignal
- 18: Abstand zweier Messpunkte
- 19: Phasengrenzlinie
- 20: Ungestörtes Messsignal
- 21: Verbindung zwischen zwei Messpunkten

## Patentansprüche

1. Verfahren zur Bestimmung und/oder Überwachung von Aggregatszustandsänderungen von zumindest einem ersten Teil eines Messmediums an einem thermischen Durchflussmessgerät (1),
wobei mittels der Temperatur des Messmediums (3), mittels der chemischen Zusammensetzung des Messmediums (3) und mittels des Partialdrucks zumindest des ersten Teils des Messmediums (3) und/oder mittels des Gesamtdrucks des Messmediums (3), zumindest eine Phasengrenzlinie (19) zumindest des ersten Teils des Messmediums (3) bestimmt wird,
und wobei zumindest ein erstes Messsignal (14) aus einer Temperaturdifferenz (ΔT) zwischen einem ersten Temperatursensor (11) und einem zweiten Temperatursensor (12) des thermischen Durchflussmessgeräts (1) und/oder aus einer dem Messmedium (3) zugeführten Heizleistung (Q) bereitgestellt wird, wobei bei einem Zustand zumindest des ersten Teils des Messmediums (3) im Bereich der Phasengrenzlinie (19) des ersten Teils des Messmediums (3), Störungen (15) im Messsignal (14) vorgegebener Art als Aggregatszustandsänderungen zumindest des ersten Teils des Messmediums (3) am thermischen Durchflussgerät (1) erkannt werden.

2. Verfahren nach Anspruch 1,
**dadurch gekennzeichnet,**
**dass** die Steigung zwischen zwei vorgegebenen Punkten (16, 17) des ersten Messsignals (14) zur Erkennung der Aggregatszustandsänderungen zumindest des ersten Teils des Messmediums (3) am thermischen Durchflussgerät (3) bestimmt wird.

3. Verfahren nach Anspruch 2,
**dadurch gekennzeichnet,**
**dass** der Abstand (18) zwischen den zwei vorgegebenen Punkten (16, 17) des Messsignals (14) zur Berechnung der Steigung des Messsignals (14) eine Funktion der Messfrequenz und der Zusammensetzung des Messmediums (3) ist.

4. Verfahren nach einem der Ansprüche 1 bis 3,
**dadurch gekennzeichnet,**
**dass** das Vorliegen der als Aggregatszustandsänderungen zumindest des ersten Teils des Messmediums (3) am thermischen Durchflussgerät (1) erkannten Störungen im Messsignal (14) am Durchflussmessgerät (1) ausgegeben werden.

5. Verfahren nach einem der Ansprüche 1 bis 4,
**dadurch gekennzeichnet,**
**dass** die als Aggregatszustandsänderungen zumindest des ersten Teils des Messmediums (3) am thermischen Durchflussgerät (1) erkannten Störungen (15) im Messsignal (14) korrigiert werden.

6. Verfahren nach einem der Ansprüche 1 bis 5,
**dadurch gekennzeichnet,**
**dass** vor einer drohenden Aggregatszustandsänderung im Prozess gewarnt wird.

7. Verfahren nach einem der Ansprüche 1 bis 6,
**dadurch gekennzeichnet,**
**dass** der Bereich, in welchem sich der momentane Zustand des Messmediums (3) relativ zu seinen Phasengrenzlinien (19) befindet, wobei Störungen (15) im Messsignal (14) vorgegebener Art als Aggregatszustandsänderungen zumindest des ersten Teils des Messmediums (3) am thermischen Durchflussgerät (1) erkannt werden, höchstens 100mBar und/oder 1°K beträgt.

8. Verfahren zur Korrektur von Störungen (1514) vorgegebener Art in einem Messsignal (14) eines thermischen Durchflussmessgeräts (1), welche Störungen (15) im Messsignal (14) vorgegebener Art als Aggregatszustandsänderungen von zumindest eines ersten Teils des Messmediums (3) am thermischen Durchflussgerät (1) erkannt werden, wobei mittels der Temperatur des Messmediums (3), mittels der chemischen Zusammensetzung des Messmediums (3) und mittels des Partialdrucks zumindest des ersten Teils des Messmediums (3) und/oder mittels des Gesamtdrucks des Messmediums (3), zumindest eine Phasengrenzlinie (19) zumindest des ersten Teils des Messmediums (3) bestimmt wird, und wobei zumindest das Messsignal (14) des thermischen Durchflussmessgeräts (1) aus einer Temperaturdifferenz (ΔT) zwischen einem ersten Temperatursensor (11) und einem zweiten Temperatursensor (12) des thermischen Durchflussmessgeräts (1) und/oder aus einer dem Messmedium (3) zugeführten Heizleistung (Q) bereitgestellt wird, wobei bei einem Zustand zumindest des ersten Teils des Messmediums (3) im Bereich der Phasengrenzlinie (19) des ersten Teils des Messmediums (3) die Störungen (15) im Messsignal (14) vorgegebener Art als Aggregatszustandsänderungen zumindest des ersten Teils des Messmediums (3) am thermischen Durchflussgerät (1) erkannt werden, wobei die als Aggregatszustandsänderungen von zumindest eines ersten Teils des Messmediums (3) am thermischen Durchflussgerät (1) erkannten Störungen (15) im Messsignal (14) geglättet werden.

9. Verfahren zur Korrektur von Störungen (15) vorgegebener Art in einem Messsignal (14) eines thermischen Durchflussmessgeräts (1) nach Anspruch 8,
**dadurch gekennzeichnet,**
**dass** der letzte Messwert des Messsignals (14) vor der erkannten Störung (15) im Messsignal (14) so lange ausgegeben wird, bis keine Störung (15) mehr im Messsignal (14) erkannt wird.

10. Thermisches Durchflussmessgerät (1) zur Bestimmung und/oder Überwachung des Durchflusses eines Messmediums (3) durch ein Messrohr (2), mit zwei Temperatursensoren (11, 12) und einer Regel-/Auswerteeinheit (10), wobei die beiden Temperatursensoren (11, 12) in einem dem Messmedium (3) zugewandten Bereich eines Gehäuses angeordnet und in thermischem Kontakt mit dem durch das Messrohr (2) strömende Messmedium (3) sind, wobei ein erster Temperatursensor (11) beheizbar ausgestaltet ist, wobei ein zweiter Temperatursensor (12) Information über die aktuelle Temperatur des Messmediums (3) bereitstellt, wobei die Regel-/Auswerteeinheit (10) anhand der Temperaturdifferenz (AT) zwischen den beiden Temperatursensoren (11, 12) und/oder anhand der dem ersten Temperatursensor (11) zugeführten Heizleistung (Q) den Massedurchfluss des Messmediums (3) bestimmt,
**dadurch gekennzeichnet,**
**dass** das thermische Durchflussmessgerät (1) so ausgestaltet ist, dass Aggregatszustandsänderungen von zumindest einem ersten Teil des Messmediums (3) am thermischen Durchflussmessgerät (1) erkennbar und/oder korrigierbar und/oder am Durchflussmessgerät (1) ausgebbar sind.

11. Thermisches Durchflussmessgerät nach Anspruch 10,
**dadurch gekennzeichnet,**
**dass** die Störungen (15) im Messsignal (14) vorgegebener Art als Aggregatszustandsänderungen zumindest des ersten Teils des Messmediums (3) an einem beheizbaren Temperatursensor (11) thermischen Durchflussgerät (1) erkennbar und/oder korrigierbar und/oder am Durchflussmessgerät (1) ausgebbar sind.
